# EUROPÄISCHE PATENTANMELDUNG

(11) **EP 4 112 563 A1**
(43) Veröffentlichungstag der Anmeldung: **04.01.2023**
(21) Anmeldenummer: 22181819.8
(22) Anmeldetag: 29.06.2022
(51) Int. Cl.: C02F 1/32, A61L 2/10

(54) **SYSTEM ZUM DESINFIZIEREN VON TRINKWASSER**

(30) Priorität: 02.07.2021 DE 102021117137
(71) Anmelder: Solvis GmbH, 38112 Braunschweig (DE)
(72) Erfinder: JÄGER, Helmut, 38112 Braunschweig (DE); FORM, Jochen, 38112 Braunschweig (DE); LOBAS, Daniel, 38112 Braunschweig (DE); EICHHOFF, Julian, 38112 Braunschweig (DE)
(74) Vertreter: Gramm, Lins & Partner Patent- und Rechtsanwälte PartGmbB

(57) **Zusammenfassung**

Die Erfindung betrifft ein System zum Desinfizieren von Trinkwasser, wobei das System wenigstens eine UV-Strahlungsquelle (10), wenigstens eine Turbine (6), die eingerichtet ist, elektrische Energie aus der Bewegung von durch das System fließendem Wasser zu erzeugen, und wenigstens ein Rückführungsmodul (20) aufweist, durch das Wasser von in Strömungsrichtung hinter der UV-Strahlungsquelle (10) nach in Strömungsrichtung vor der UV-Strahlungsquelle (10) leitbar ist.

## Beschreibung

Die Erfindung betrifft ein System zum Desinfizieren von Trinkwasser, wobei das System wenigstens eine UV-Strahlungsquelle aufweist.

Trinkwasser, das in Gebäuden verwendet wird, muss von gesundheitsgefährdenden Bakterien und Mikroorganismen, wie beispielsweise Legionellen, gereinigt und desinfiziert werden. Dazu ist es bekannt, dass Trinkwasser mit UV-Strahlung zu beaufschlagen und so die Vermehrungsfähigkeit von Legionellen und anderen Bakterien zu zerstören. Viele derartige UV-Desinfektionsgeräte sind aus dem Stand der Technik bekannt und werden zur Desinfektion von Trinkwasser verwendet.

Nachteilig ist jedoch, dass diese Desinfektion der oftmals mit Niederdruckdampflampen ausgestattet sind, die nach dem Einschalten erst mit einer zeitlichen Verzögerung die für die optimale Wirkung notwendige Strahlendosis liefern. Insbesondere für einen stark schwankenden Volumenstrom des Trinkwassers am Hauseingang oder an einer Zapfstelle sind derartige UV-Strahlungsquellen kaum geeignet.

Herkömmlicherweise wird das Trinkwasser beim Eintritt in das Gebäude, also am Hauseingang, gereinigt und desinfiziert. Durch einen solchen Hausanschluss oder Hauseingang wird kaltes Trinkwasser in die Installation und die Anlage des Gebäudes eingespeist. Die Temperatur des eingespeisten Trinkwassers, die sogenannte Kaltwassertemperatur, ist aber in den letzten Jahren angestiegen. Dies ist einerseits durch den Klimawandel bedingt, der dazu führt, dass insbesondere in den Sommermonaten die Kaltwassertemperaturen vor Gebäuden, also im Versorgungsnetz, auf über 20 °C ansteigen können. Dies ist als hygienisch bedenklich zu bewerten. Zudem steigen auch innerhalb des Gebäudes die Raum- und Bauteiltemperaturen insbesondere durch die verstärkte Dämmung moderner Gebäude. Auch bei vorschriftsmäßiger Rohrdämmung innerhalb des Gebäudes ist es oftmals nicht zu vermeiden, dass die Kaltwassertemperaturen 25 °C und somit den zulässigen Grenzwert überschreiten.

Dies führt dazu, dass sich innerhalb der Rohrleitungen eines Gebäudes Bakterien und andere Mikroorganismen stärker vermehren als dies in den letzten Jahren der Fall gewesen ist. Eine einmalige Desinfektion des Trinkwassers am Hauseingang, die zwar einen großen Teil jedoch eben nicht alle derartigen Mikroorganismen beseitigt, ist gegebenenfalls nicht mehr ausreichend, insbesondere wenn über einen längeren Zeitraum an einer bestimmten Zapfstelle kein Wasser entnommen wird. Dies ist beispielsweise dann der Fall, wenn die Bewohner einer Wohnung oder eines Hauses im Urlaub sind und somit über mehrere Wochen kein Wasser entnehmen.

Der Erfindung liegt daher die Aufgabe zugrunde, ein System zum Desinfizieren von Trinkwasser bereitzustellen, das direkt an der Zapfstelle verwendbar ist und auch für den Fall, dass längere Zeit kein Wasser an der Zapfstelle entnommen wird, eine ausreichende Desinfektion sichergestellt wird.

Die Erfindung löst die gestellte Aufgabe durch ein System zum Desinfizieren von Trinkwasser, wobei das System wenigstens eine UV-Strahlungsquelle, wenigstens eine Turbine, die eingerichtet ist, elektrische Energie aus der Bewegung von durch das System fließendem Wasser zu erzeugen, und wenigstens ein Rückführungsmodul aufweist, durch das Wasser von in Strömungsrichtung hinter der UV-Strahlungsquelle nach in Strömungsrichtung vor der UV-Strahlungsquelle leitbar ist.

Die wenigstens eine UV-Strahlungsquelle ist dabei so angeordnet und ausgerichtet, dass sie das durch das System fließende Wasser mit UV-Strahlung beaufschlagt und so desinfiziert. Die dazu notwendige elektrische Energie in Form von elektrischem Strom wird von der wenigstens einen Turbine erzeugt, die durch das fließende Wasser angetrieben wird. Auf diese Weise ist eine zusätzliche Stromversorgung unnötig und das System kann mit wenig benötigten Bauraum realisiert werden. Zudem ist es einfach möglich, auch bestehende Trinkwasserinstallationen mit einem derartigen System nachzurüsten. Insbesondere müssen keine elektrischen Kabel verlegt werden. Da das System auf diese Weise sehr nah, nahezu unmittelbar, vor der Zapfstelle des Trinkwassers angeordnet werden kann, beispielsweise in oder vor einem Wasserhahn oder Duschkopf, ist sichergestellt, dass einmal desinfiziertes Wasser bevor es verwendet wird nicht erneut kontaminiert wird. Eventuell nicht unschädlich gemachte Bakterien oder Mikroorganismen haben keine Zeit, sich zu einer hygienisch bedenklichen Konzentration zu vermehren.

Zusätzlich verfügt das erfindungsgemäße System über ein Rückführungsmodul, durch das Wasser hindurch geleitet werden kann. Dabei wird das Wasser einer Stelle in Strömungsrichtung hinter der UV-Strahlungsquelle entnommen und an eine Stelle geleitet, die in Strömungsrichtung vor der UV-Strahlungsquelle liegt. In einer besonders bevorzugten Ausgestaltung liegt die Entnahmestelle, von der das Rückführungsmodul das Wasser entnimmt, unmittelbar vor der Zapfstelle. So kann auch für den Fall, dass über einen längeren Zeitraum kein Wasser der Zapfstelle entnommen wird, sichergestellt werden, dass danach hygienisch unbedenkliches Wasser der Zapfstelle entnommen wird.

Vorteilhafterweise verfügt das System über einen elektrischen Energiespeicher, in dem die von der Turbine erzeugte elektrische Energie gespeichert wird. Dieser Energiespeicher, vorzugsweise ein Akku, wird verwendet, um das System auch dann zu betreiben, wenn kein Wasser der Zapfstelle, die hinter dem System liegt, entnommen wird. Da in diesem Zustand kein Wasser durch das System fließt, kann die Turbine auch keine elektrische Energie erzeugen, sodass auf einen Energiespeicher zurückgegriffen wird.

Vorzugsweise verfügt die wenigstens eine UV-Strahlungsquelle über wenigstens eine UV-LED. Diese können auch in kleinen Bauraum verwendet werden und benötigen wenig Energie, um die benötigte UV-Strahlung zu erzeugen. Daher sind sie für Systeme der hier beschriebenen Art gut geeignet. Dies gilt umso mehr, als LEDs sehr robust sind, wenig Wartungsaufwand erfordern und nach dem Einschalten sehr schnell die notwendige UV-Strahlungsleistung liefern.

Vorzugsweise verfügt das System über ein Kommunikationsmodul, beispielsweise ein Funkmodul, ein Bluetooth-Modul oder ein LoRaWAN-Modul. Mit diesem Modul ist es dem System möglich, mit einem entsprechenden Gegenstück zu kommunizieren und beispielsweise Steuersignale zu empfangen oder Sensordaten weiterzugeben. Ein LoRaWAN (Long Range Wide Area Network)-Modul ist ein Funksystem mit sehr niedrigem Energiebedarf und gleichzeitig hoher Reichweite über Grenzen von Gebäuden hinaus.

In einer bevorzugten Ausgestaltung verfügt das System über eine elektrische Steuerung, beispielsweise einen Mikroprozessor, die eingerichtet ist, Wasser durch das Rückführungsmodul zuleiten, wenn für eine vorbestimmte Zeitspanne kein Wasser durch das System geleitet wurde. Dazu ist es von Vorteil, wenn das System über wenigstens einen Sensor verfügt, der Messdaten aufnimmt, aus denen Rückschlüsse auf die durch das System geflossene Wassermenge gezogen werden können. Dazu kann die Leistung der Turbine genutzt werden. Zudem ist es von Vorteil, wenn aus den Messdaten ebenfalls erkennbar ist, wann die Wassermengen durch das System fließen. Die Sensordaten werden von der elektrischen Steuerung verarbeitet, die auf der Basis der darin enthaltenen Informationen Steuersignale erzeugt, um beispielsweise die UV-Strahlungsquelle und/oder das Rückführungsmodul zu steuern. Insbesondere ist in einem elektronischen Datenspeicher, der vorzugsweise Teil der elektrischen Steuerung ist, eine vorbestimmte Zeitdauer hinterlegt. Sobald sich aus dem Sensordaten ergibt, das für eine Dauer, die länger als die vorbestimmte Zeitdauer ist, kein Wasser durch das System geflossen ist, werden Steuersignale erzeugt, durch die Wasser durch das Rückführungsmodul geleitet wird. Da dieses Wasser in Strömungsrichtung hinter der UV-Strahlungsquelle entnommen und in Strömungsrichtung vor der UV-Strahlungsquelle eingespeist wird, kommt es zu einer Umwälzung des sich innerhalb des Systems befindenden Wassers.

Bevorzugt ist die elektrische Steuerung eingerichtet, die Turbine derart zu steuern, dass sie Wasser durch das Rückführungsmodul pumpt. Dazu wird sie vorzugsweise durch die elektrische Steuerung mit elektrischer Energie versorgt.

Vorzugsweise ist die elektrische Steuerung eingerichtet, die wenigstens eine UV-Strahlungsquelle zu betreiben, wenn Wasser durch das System geleitet wird oder wenn Wasser durch das Rückführungsmodul geleitet wird. Auf diese Weise wird auch beim Umwälzung des Wassers durch das Rückführungsmodul gewährleistet, dass eine Desinfektion durch von der UV-Strahlungsquelle erzeugte UV-Strahlung stattfindet.

Dafür ist es zwar von Vorteil, wenn das System eine elektrische Steuerung aufweist, notwendig ist dies jedoch nicht. Es ist ausreichend, wenn das System mit einer elektrischen Steuerung in Kontakt treten und mit ihr kommunizieren kann, die dann eingerichtet ist, die einzelnen Bestandteil des Systems, insbesondere die Turbine und/oder die wenigstens eine UV-Strahlungsquelle zu steuern. Vorzugsweise ist die elektrische Steuerung jedoch Teil des Systems. Wenn das System über ein Kommunikationsmodul verfügt, können beispielsweise auch die vom Sensor ermittelten Messdaten über das Kommunikationsmodul an eine externe elektronische Steuerung, die beispielsweise ein Computer sein kann, übermittelt und dort verarbeitet. Die externe elektronische Steuerung verfügt über eine Schnittstelle, die eine Kommunikation mit dem Kommunikationsmodul des Systems erlaubt und ist vorzugsweise in der Lage, die übermittelten Messwerte zu verarbeiten. Die externe elektronische Steuerung erzeugt dann die benötigten Steuersignale, die über die Kommunikations-Schnittstelle und das Kommunikationsmodul an das System übermittelt werden. Vorzugsweise ist in diesem Fall die externe elektronische Steuerung auch eingerichtet, auf einen elektronischen Datenspeicher zu zugreift, in dem beispielsweise die vorbestimmte Zeitdauer hinterlegt ist.

Vorteilhafterweise ist die wenigstens eine UV-Strahlungsquelle eingerichtet, UV-Strahlung einer Wellenlänge von 200 nm bis 300 nm auszusenden.

In einer bevorzugten Ausgestaltung verfügt das Rückführungsmodul über wenigstens eine Rückführungsleitung und ein Ein-Wege-Ventil. Wird die Turbine als Pumpe betrieben, entnimmt sie Wasser der Entnahmestelle in Strömungsrichtung hinter der UV-Strahlungsquelle und pumpt es durch die Rückführungsleitung an die Stelle vor der UV-Strahlungsquelle. Auch wenn sich die Turbine in Strömungsrichtung vor der UV-Strahlungsquelle befindet, ist dies möglich. Sie drückt dann beispielsweise Wasser in Richtung UV-Strahlungsquelle. Die Ableitung, durch die Wasser das System verlassen könnte, ist in dieser Situation bevorzugt geschlossen, sodass das Wasser in das Rückführungsmodul gedrückt und so wieder in Strömungsrichtung vor die UV-Strahlungsquellen geleitet wird. Unter einem Ein-Wege-Ventil wird im Rahmen dieser Erfindung alles verstanden, das einen Durchfluss in einer ersten Richtung erlaubt und in der entgegengesetzten zweiten Richtung unterbindet. Die erste Richtung verläuft dabei von in Strömungsrichtung hinter der wenigstens einen UV-Strahlungsquelle nach in Strömungsrichtung vor der UV-Strahlungsquelle.

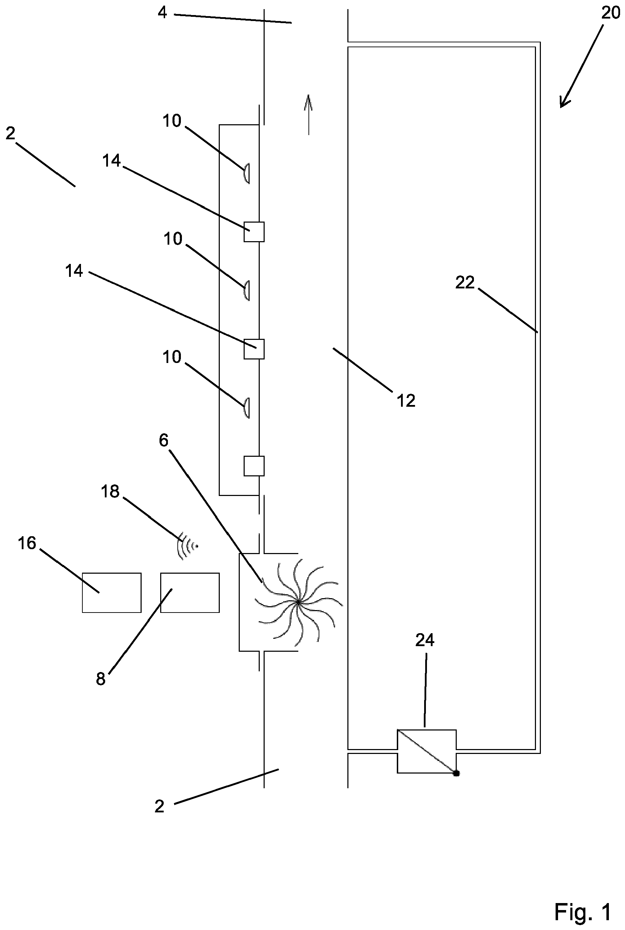

Mithilfe der beigefügten Zeichnung wird nachfolgend ein Ausführungsbeispiel der vorliegenden Erfindung näher erläutert. Es zeigt
Figur 1 - die schematische Darstellung eines Systems gemäß einem Ausführungsbeispiel der vorliegenden Erfindung.

Figur 1 zeigt ein System gemäß einem Ausführungsbeispiel der vorliegenden Erfindung. Es verfügt über eine Zuleitung 2, durch die Wasser in das System gelangen kann. Es wird im gezeigten Ausführungsbeispiel von unten nach oben durch das System geleitet und verlässt das System durch eine Ableitung 4. Vorzugsweise befindet sich direkt an dieser Ableitung 4 eine Zapfstelle für Trinkwasser. Das Wasser, das von unten durch die Zuleitung 2 in das System strömt, treibt eine Turbine 6 an, die elektrische Energie erzeugt. Diese wird in einem dafür vorgesehenen elektrischen Energiespeicher 8 gespeichert.

Die elektrische Energie aus dem Energiespeicher 8 wird verwendet, um mehrere UV-Strahlungsquellen 10 mit elektrischem Strom zu versorgen. Das System kann auch nur eine einzige UV-Strahlungsquelle aufweisen. Dabei handelt es sich vorzugsweise um UV-LEDs, die so angeordnet sind, dass sie die erzeugte UV-Strahlung in einen Desinfektionskanals 12 einstrahlen, durch den das Wasser fließt. Das Wasser wird so desinfiziert. Zusätzlich verfügt das System über Sensoren 14, von denen drei Stück gezeigt sind. Unterschiedliche Sensoren sind sinnvoll. So kann beispielsweise ein Temperatursensor vorhanden sein, der die Temperatur des strömenden Wassers misst. Je höher die Temperatur ist, desto höher sollte auch die von den UV-Strahlungsquellen 10 ausgesandte Strahlendosis sein. Alternativ oder zusätzlich dazu ist einer der Sensoren 14 als UV-Sensor ausgebildet. Diese sind bevorzugt auf der den UV-Strahlungsquellen 10 gegenüberliegenden Seite des Desinfektionskanals 12 angeordnet, können jedoch auch an der in Figur 1 gezeigten Position der Sensoren 14 angeordnet sein. Mit einem UV-Sensor lässt sich beispielsweise die Funktionsfähigkeit der UV-Strahlungsquellen 10 überwachen. Alternativ oder zusätzlich dazu ist wenigstens einer der Sensoren 14 als Volumenstrommesser ausgebildet, sodass festgestellt werden kann, zu welchem Zeitpunkt wie viel Wasser durch das System strömt.

Das System gemäß Figur 1 verfügt zudem über eine elektrische Steuerung 16. Diese ist im gezeigten Ausführungsbeispiel mit einem nur schematisch dargestellten Kommunikationsmodul 18 verbunden, wodurch eine Kommunikation mit externen Steuerungen, Computern oder sonstigen elektronischen Datenverarbeitungsanlagen und Kommunikationsgeräten ermöglicht wird.

Zusätzlich verfügt das System gemäß Figur 1 über ein Rückführungsmodul 20, das über eine Rückführungsleitung 22 und ein Ein-Wege-Ventil 24 verfügt. Das Ventil 24 verhindert den Durchfluss in der gezeigten Anordnung von unten nach oben. Die Turbine 6 ist vorzugsweise durch die elektrische Steuerung 16 steuerbar und pumpt dann Wasser im gezeigten Ausführungsbeispiel von der Ableitung 4 zur Zuleitung 2, also von einer Stelle in Strömungsrichtung hinter der UV-Strahlungsquelle 10 zu einer Stelle in Strömungsrichtung vor der UV-Strahlungsquelle 10.

### Bezugszeichenliste

- 2: Zuleitung
- 4: Ableitung
- 6: Turbine
- 8: Energiespeicher
- 10: UV-Strahlungsquelle
- 12: Desinfektionskanals
- 14: Sensor
- 16: elektrische Steuerung
- 18: Kommunikationsmodul
- 20: Rückführungsmodul
- 22: Rückführungsleitung
- 24: Ein-Wege-Ventil

## Patentansprüche

1. System zum Desinfizieren von Trinkwasser, wobei das System
- wenigstens eine UV-Strahlungsquelle (10),
- wenigstens eine Turbine (6), die eingerichtet ist, elektrische Energie aus der Bewegung von durch das System fließendem Wasser zu erzeugen, und
- wenigstens ein Rückführungsmodul (20) aufweist, durch das Wasser von in Strömungsrichtung hinter der UV-Strahlungsquelle (10) nach in Strömungsrichtung vor der UV-Strahlungsquelle (10) leitbar ist.

2. System nach Anspruch 1, **dadurch gekennzeichnet, dass** das System einen elektrischen Energiespeicher (8) aufweist, in dem von der Turbine (6) erzeugte elektrische Energie speicherbar ist.

3. System nach Anspruch 1 oder 2, **dadurch gekennzeichnet, dass** die wenigstens eine UV-Strahlungsquelle (10) wenigstens eine UV-LED aufweist.

4. System nach einem der vorstehenden Ansprüche, **dadurch gekennzeichnet, dass** das System ein Kommunikationsmodul (18), beispielsweise ein Funkmodul, ein Bluetooth-Modul oder ein LoRaWAN-Modul aufweist.

5. System nach einem der vorstehenden Ansprüche, **dadurch gekennzeichnet, dass** das System eine elektrische Steuerung (16) aufweist, die eingerichtet ist, Wasser durch das Rückführungsmodul (20) zu leiten, wenn für eine vorbestimmte Zeitspanne kein Wasser durch das System geleitet wurde.

6. System nach Anspruch 5, **dadurch gekennzeichnet, dass** die elektrische Steuerung (16) eingerichtet ist, die Turbine (6) derart zu steuern, dass sie Wasser durch das Rückführungsmodul (20) pumpt.

7. System nach Anspruch 5 oder 6, **dadurch gekennzeichnet, dass** die elektrische Steuerung (16) eingerichtet ist, die wenigstens eine UV-Strahlungsquelle (10) zu betreiben, wenn Wasser durch das System geleitet wird oder wenn Wasser durch das Rückführungsmodul (20) geleitet wird.

8. System nach einem der vorstehenden Ansprüche, **dadurch gekennzeichnet, dass** die wenigstens eine UV-Strahlungsquelle (10) eingerichtet ist, UV-Strahlung einer Wellenlänge von 200nm bis 300nm auszusenden.

9. System nach einem der vorstehenden Ansprüche, **dadurch gekennzeichnet, dass** das Rückführungsmodul (20) wenigstens eine Rückführungsleitung (22) und ein Ein-Wege-Ventil (24) aufweist.
